(19) Europäisches Patentamt
European Patent Office
Office européen des brevets

(11) **EP 2 541 292 B1**

(12) **EUROPEAN PATENT SPECIFICATION**

(45) Date of publication and mention
of the grant of the patent:
**01.10.2014 Bulletin 2014/40**

(51) Int Cl.:
***G02B 6/036*** (2006.01)     ***G02B 6/028*** (2006.01)

(21) Application number: **11305851.5**

(22) Date of filing: **01.07.2011**

(54) **Multimode optical fibre**

Multimode-Lichtleitfaser

Fibre optique multimode

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2013 Bulletin 2013/01**

(73) Proprietor: **Draka Comteq BV
1083 HJ Amsterdam (NL)**

(72) Inventors:
• **Bigot-Astruc, Marianne
91460 MARCOUSSIS (FR)**

• **Molin, Denis
91210 DRAVEIL (FR)**
• **Sillard, Pierre
78150 LE CHESNAY (FR)**

(74) Representative: **Algemeen Octrooi- en
Merkenbureau B.V.
P.O. Box 645
5600 AP Eindhoven (NL)**

(56) References cited:
**EP-A1- 2 518 546     WO-A1-2011/109263
US-A- 5 115 486     US-A1- 2010 067 858**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the field of optical fibre transmissions, and more specifically a depressed graded-index multimode optical fibre with a trench and a method to manufacture such fibre.

In standard fashion, an optical fibre is composed of an optical core the function of which is to transmit and optionally amplify an optical signal, and an optical cladding the function of which is to confine the optical signal within the core. To this end, the refractive indices of the core $n_{core}$ and the cladding $n_{cladding}$ are such that $n_{core} > n_{cladding}$.

The index profile of a fibre denotes the graph of the function which associates the refractive index with the radius of the fibre. In standard fashion, the distance to the centre of the fibre is shown on the x-axis, and on the y-axis, the difference between the refractive index and the refractive index of the fibre cladding. Generally the index profile is qualified according to its appearance. Thus the index profile is described in terms of a "step", "trapezium", "triangle", or "alpha" for graphs which have step, trapezium, triangle, or graded shapes respectively. These curves are representative of the theoretical or set profile of the fibre, while the manufacturing constraints of the fibre may result in a substantially different profile.

Two main types of optical fibres exist, multimode fibres and single mode fibres. In a multimode fibre, for a given wavelength, several optical modes are propagated simultaneously along the fibre, whereas in a single mode fibre modes of a higher order are strongly attenuated. The typical diameter of a single mode or multimode optical fibre is 125 μm. The core of a multimode fibre typically has a diameter of 50 μm or 62.5 μm, whereas the core of a single-mode fibre generally has a diameter of approximately 6 μm to 9 μm. The multimode systems are less expensive than the single mode systems, as the sources, connectors, and maintenance are of lower cost.

Now, in a multimode fibre, the bandwidth is linked to the intermodal dispersion. In fact, the bandwidth results from the difference between the propagation times, or group delay times, of the modes along the fibre. In particular, for the same propagation medium (in a step index multimode fibre), the different modes have group delay times which are different. This results in a time lag between the pulses propagating in different radial directions. A time lag between the individual pulses causes a broadening of the resulting light pulse which risks being superimposed onto a following pulse, and thus reduces the data rate supported by the fibre. The bandwidth is therefore directly linked to the group delay time of the optical modes propagating in the multimode core of the fibre. In order to guarantee a broad bandwidth, the group delay times of all the modes should be identical; i.e. for the intermodal dispersion to be zero, or at least minimized, for a given wavelength.

In order to reduce the intermodal dispersion in a multimode fibre, it has been proposed to produce graded-index fibres with an "alpha" core profile. Such a fibre has been used for many years and its characteristics have been described in particular in "Multimode theory of graded-core fibres" by D. Gloge et al., Bell system Technical Journal 1973, pp 1563-1578, and summarized in "Comprehensive theory of dispersion in graded-index optical fibres" by G. Yabre, Journal of Lightwave Technology, February 2000, Vol. 18, No. 2, pp 166-177.

A fibre having a graded-index profile or alpha-index profile - these two terms are equivalent - is a fibre with a graded-index core surrounded by cladding with a constant optical index. The $\alpha$ graded-index profile follows a power law of parameter $\alpha$ which can be defined by a relationship between the index value n at a point as a function of the distance r from this point to the centre of the fibre:

$$n(r) = n_{max} \sqrt{1 - 2\Delta \left( \frac{r}{r_1} \right)^{\alpha}}$$

with $\alpha \geq 1$ ($\alpha \rightarrow \infty$ corresponding to the development of the index of a step-index fibre);
$n_{max}$, the maximum optical index of the core of the multimode fibre;
$r_1$, the radius of the core of the multimode fibre; and

$$\Delta = \frac{\left( n_{max}^2 - n_{min}^2 \right)}{2 n_{max}^2}$$

where $n_{min}$ is the minimum index of the multimode core, generally corresponding to the index of the cladding (most often made of silica).

A graded-index multimode fibre therefore has a core profile with a rotational symmetry such that in any radial direction the value of the index decreases continuously from the centre of the fibre to its periphery. When a multimode light signal propagates in such a core having a graded index, the different modes experience a different propagation medium, which affects their speed of propagation differently. By adjusting the value of the parameter $\alpha$, it is therefore possible to obtain a group delay time which is virtually equal for all the modes and therefore a reduced intermodal dispersion. In such multimode fibres having an adjusted $\alpha$ parameter, bandwidth can be maximized for communication data at a given wavelength, or optimized to provide a high bandwidth over a range of wavelengths (e.g. between 850 nm and 1300 nm).

Multimode fibres have been the subject of international standardization under standard ITU-T G.651.1 which in particular defines criteria for bandwidths, numerical aperture, core diameter which relate to the requirements for compatibility between fibres. The standard OM3 has been adopted to satisfy high-speed applications (greater than 1GbE) over long distances (greater than 300 m). With the development of high-speed applications the average core diameter has been reduced from 62.5 $\mu$m to 50 $\mu$m. Such multimode fibres with a large bandwidth are in particular intended to be used for short distances in a local area network (LAN).

Another increasing interest in using multimode fibres concerns their use in nuclear power plants and other radiation-rich environments, such as particle acceleration laboratories and satellites. For example, optical fibres may be used in optical data communication links, distributed sensors, plasma diagnostics, and instrumentation systems. In such applications, optical fibres typically transmit signals through noisy electromagnetic environments, high gamma ray dosages and/or dosage rates, and high neutron fluencies. Signals transmitted via optical fibres typically undergo optical losses (*i.e.*, attenuation) that accumulate over the distance traveled. These transmission losses increase substantially when the optical fibre is subjected to ionizing radiation, such as beta, alpha, gamma, and/or X-rays. Presence of Germanium and Phosphorus in the silicate glass matrix promotes the formation of defects in the silicate glass under irradiation. One solution to reduce radiation-induced attenuation consists in using Phosphorus-free and Germanium-free fibre.

Another promising application for multimode fibre optics is distributed temperature sensing in geothermal wells. Temperature profile obtained just after drilling can provide guidance as how to best harness heat generated by the well. Additionally, long-term thermal monitoring of a power-producing geothermal well is needed to optimize its running. For such use to be practical, however, requires that the optical fibre to be placed in the geothermal well can survive to harsh hydrogencontaining downhole environment for a period measured in years. Transmission anomalies are found to relate to the formation of OH ions in the silicate glass matrix of the optical fibres. The likely degradation mechanism is that hydrogen in the hot downhole environment diffuses into the fibre and reacts with the oxygen of the silicate glass to form OH ions. Presence of Germanium and Phosphorus in the silicate glass matrix promotes the formation of OH ions. One solution consists in using Phosphorus-free and very low Germanium content fibres, combined with barrier coatings.

Phosphorus-free and Germanium-free multimode fibres have conventionally a graded-index alpha profile and a cladding in silica doped with fluorine to reduce its refractive index. Graded-index core and cladding are therefore depressed compared to pure silica index.

WO2011/109263A is prior art under Article 54(3) EPC and discloses a large core multimode optical fiber with high numerical aperture. Said fiber comprises a core region having a radius of greater than 30 microns and a cladding region surrounding and directly adjacent to the core region. The cladding region comprising a depressed-index annular portion comprising a depressed relative refractive index.

In a known way *per se,* an optical fibre is made by drawing a preform on a fibre-drawing tower. A preform for example comprises a primary preform consisting of a very high quality glass tube making up a portion of the cladding and core of the fibre. This primary preform is then over cladded or sleeved in order to increase its diameter and to form a preform, which may be used on a fibre-drawing tower. The scaled fibre-drawing operation consists of placing the preform vertically in a tower and of drawing a fibre strand from the end of the preform. For this, a high temperature is locally applied at one end of the preform until the silica is softened; the fibre-drawing rate and the temperature are then permanently monitored during the fibre drawing as they determine the diameter of the fibre. The geometry of the preform should perfectly observe the ratios of the refractive indexes and of the core and cladding diameters of the fibre so that the drawn fibre has the required profile.

The primary preform may consist of a substrate tube, generally in quartz, in which one or more layers of doped and/or undoped silica have been deposited to form the core and an inner cladding of the fibre. Deposition techniques inside a substrate tube include MCVD (Modified Chemical Vapor Deposition), FCVD (Furnace Chemical Vapor Deposition) or PCVD (Plasma Chemical Vapor Deposition). After depositing the layers corresponding to the core and the inner cladding, the tube is closed onto itself during an operation called collapsing.

Component deposition is commonly referred to by the expression "doping", i.e., "dopants" are added to the silica in order to change its refractive index. Thus, germanium (Ge) or phosphorus (P) increases the refractive index of silica; they are often used for doping the central core of the fibre. Moreover, fluorine (F) or boron (B) lowers the refractive index of silica; fluorine is often used for forming depressed claddings.

Making a primary preform with highly and large depressed graded-index core and cladding are delicate. It requires fluorine in both the central region and in the cladding. Indeed, fluorine for instance is poorly incorporated in heated silica beyond a certain temperature whereas a high temperature is required for making glass. PCVD technique can be efficiently used to produce depressed cladding inside a deposition tube. Such a manufacturing technique is described in documents US RE 30,635 and US 4,314,833; it allows fluorine to be significantly incorporated into silica in order to form highly depressed claddings. A deposition tube, made of silica either pure or doped with fluorine, is provided and mounted in a glasswork tower. The tube is then set into rotation and a gas mixture of silica and dopants are injected into the tube. The tube crosses a microwave cavity in which the gas mixture is heated locally. The microwave heating generates plasma by ionization of the gases injected into the tube and the ionized dopants highly react with the silica particles, causing deposition of doped silica layers inside the tube. The high reactivity of the dopants, generated by the microwave heating, enables a high concentration of dopants to be incorporated into the silica layers.

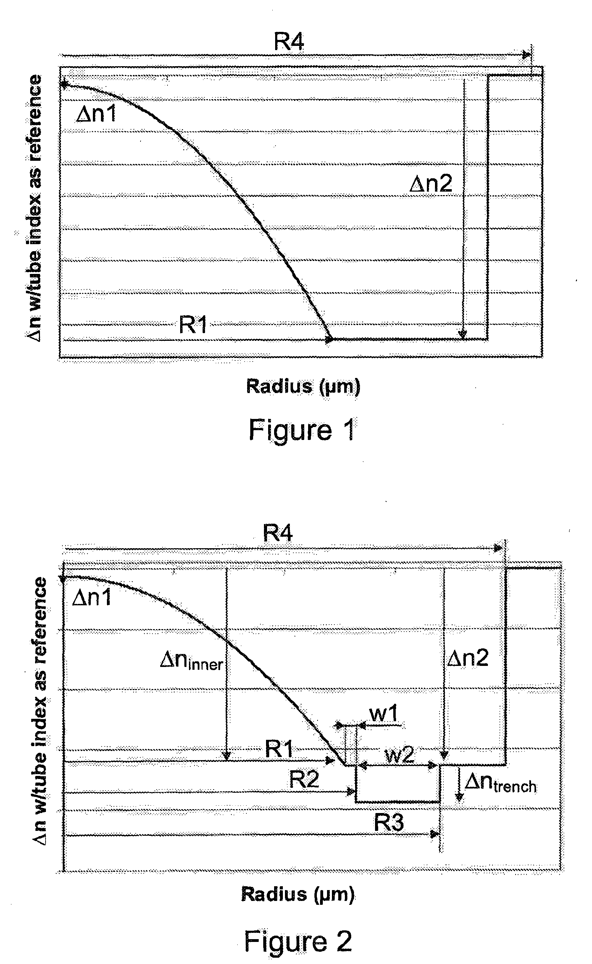

Figure 1 illustrates a set index profile of a conventional depressed graded-index multimode fibre (DGIMMF). The optical fibre includes a central core that is surrounded by an outer cladding (e.g., an outer optical cladding). For reasons of cost, the outer cladding is typically made of natural silica, but it may also be made of doped silica. As shown, the optical fibre's central core is a glass based central core having an alpha index profile (i.e., a graded-index profile) and an outer radius R1. The central core is typically doped with fluorine (F) to reduce the refractive index of the silica. Typically, the graded-index core and the inner cladding are made by deposition inside a substrate tube and the outer cladding is made of the substrate tube used for making the primary preform and of the over clad or sleeve used to reach to requested diameter ratio.

In the above-described structure, with an outer cladding having substantially the same refractive index as the top of the $\alpha$ graded-index core, the different modes sustained by the multimode fibre are not completely guided and show additional losses, called leakage. Leakage losses are due to partial reflection of the modes having their effective indexes (their real part) lower than that of the outer cladding at the inner interface of the outer cladding. Lower the effective indexes of the mode are, higher the leakage losses are. Consequently, leakage losses will be higher for the highest order modes. To minimize these leakage losses, the percentage of energy propagating in the outer pure silica cladding must be reduced. The inner depressed cladding silica must be sufficiently extended to ensure good confinement of the optical signal in the graded-index core and an acceptable level of leakage losses.

High leakage losses are detrimental because they lead to dramatic core size and numerical aperture reduction. This can be critical for backward compatibility with standard multimode fibres and for connectorization purpose.

In addition, highest attenuation of the highest order modes will lead to suppress the modes having the largest group time delay differences. As a consequence, fibre will suffer from a strong fibre length dependence on bandwidth, which can be problematic for fibre characterization purpose.

MCVD, FCVD and PCVD techniques are satisfactory to obtain good quality core and highly depressed large inner cladding but is costly whenever large capacity preforms are sought. Notably, use of CVD techniques makes it possible to limit attenuation and notably the attenuation at 1383 nm due to the OH peak.

Capacity of a preform is defined as the quantity of optical fibre length, which can be drawn from this preform. The greater the diameter of the preform is, the greater this capacity. To reduce manufacturing costs, it is desirable to provide long lengths of linear fibre drawn from one same preform. It is therefore sought to fabricate preforms of large diameter while complying with the above-mentioned constraints regarding the diameters of the central core and the depressed inner cladding. Therefore, the smaller the ratio of "outer radius of depressed cladding" over "graded-index core radius" is, the larger the diameter of the preform is and the lower the manufacturing cost is. Furthermore, reducing the width of the depressed cladding allows putting down a larger graded-index core, which helps to improve the accuracy of the alpha-shape profile.

One solution to reduce the width of the depressed cladding consists in adding a depressed trench in the inner cladding between the graded-index core and the outer cladding.

EP 2 312 350 A1 and US 2011/0085770 A1 already propose to add a trench in the inner depressed cladding to reduce leakage losses and thus to bring the outer cladding closer to the core. But this application concerns single-mode fibres for which problematic are different. Only LP01, LP11 and LP02 modes need to be managed without constraints on bandwidth, core size and numerical aperture. Furthermore, ratio of "outer radius of depressed cladding" over "core radius" is much larger than in a multimode refractive index profile.

The documents WO-A-2008/085851 and US-A-2008/0166094 describe multimode fibres having a graded-index core surrounded by a depressed-index annular portion between the core and the optical cladding. This depressed-index annular portion trench is added to reduce the bending losses of a graded-index multimode fibre.

Typically, the solutions disclosed in the documents WO-A-2008/085851 and US-A-2008/0166094, do not concern depressed graded-index multimode fibres. Applying the proposed solutions to only fluorine-doped profiles cannot allow minimizing the leakage losses when cladding is composed of a depressed cladding and of an outer cladding made of natural silica.

The documents EP-A-2 166 386 and US-A-2010/0067858 describe multimode fibres having a graded-index core and an inner cladding adjacent to the graded-index core surrounded by a depressed-index annular portion between the core and the optical cladding. This depressed-index annular portion trench is added to reduce the bending losses of a graded-index multimode fibre.

Typically, the embodiments disclosed in the documents EP2166386A1 and US 2010/0067858 A1, do not concern depressed graded-index multimode fibres. Applying the proposed embodiments to only fluorine-doped profiles cannot allow minimizing the leakage losses when cladding is composed of a depressed cladding and of an outer cladding made of natural silica.

Document EP-A-2 220 524 describes multimode fibres having a graded-index core and an inner cladding adjacent to the graded-index core surrounded by a depressed-index annular portion between the core and the optical cladding. This depressed-index annular portion trench is added to reduce the bending losses of a graded-index multimode fibre.

Furthermore, the fibres disclosed in the document EP-A-2 220 524, do not concern depressed graded-index multimode fibres. Applying the proposed solutions to only fluorine-doped profiles cannot allow minimizing the leakage losses when cladding is composed of a depressed cladding and of an outer cladding made of natural silica.

Moreover the addition of a depressed trench results in the appearance of additional leaky modes that will co-propagate with the desired leaky modes. The larger the depressed trench is, the lower the leakage losses are. On the other hand, the deeper the depressed trench is, the higher the number of leaky modes is.

These additional leaky modes have effective refractive indices, which are lower than those sustained by the depressed graded-index core. This leads to an increase in the numerical aperture measured on 2 m by the far field pattern in the graded-index fibres comprising a depressed trench, in comparison with the numerical aperture measured in the graded-index fibres without a depressed trench according to the well-known standardized IEC 60793-1-43 method. Numerical aperture of GIMMF with trench can look larger than expected by the value of the parameter $\Delta$ of its graded-index core.

In addition, the leaky modes can contribute to corrupt the core size derived from the near field pattern measured under overfilled launch (OFL) at the output of a 2m long sample with IEC 60793-1-20 Method C. Core size of GIMMF with trench can look larger than expected by its graded-index core width.

Corrupted numerical aperture and core size measurements may lead to wrong conclusions regarding the core size and the value of the parameter $\Delta$ of the refractive index profile, which are of main importance for connectivity purpose because they determine the number and the shape of the guided modes. Such a difference in number and in shape of the guided mode between two different graded-index fibres can lead to mode mismatching and therefore to high splice losses or connectivity losses.

In addition, it can be noticed that multimode fibres with cores with indexes close to that of Silica and down-doped index claddings provides multiple advantageous features compared to standard multimode fibres with up-doped cores and Silica claddings. Among improved radiation and Hydrogen resistance features, low losses and large bandwidths may be mentioned. However, these structures are difficult to make and costly a highly depressed cladding has to be deposited. Usually the index difference with Silica may reach $16 \times 10^{-3}$. Thus, the technique PCVD is often used. This technique is an inside deposition process (like the methods MCVD and FCVD) that allows to reach such negative index differences. However the Silica substrate tube has to be put far from the core in order to prevent the modes from leaking and thus experiencing high (leakage) losses, which yields to small-diameter core-rods.

A need therefore exists for a fibre, which enables to reduce the width of the down-doped cladding that has to be deposited inside the silica Substrate tubes without increasing the leakage losses of the modes and without deteriorating the other propagation characteristics of the fibre such as bandwidths, core size or numerical aperture.

For this purpose, it is proposed a multimode optical fibre according to claim 1.

According to preferred embodiments, the fibre may further comprise one or any combination of the following features:

- the difference in index between the maximal optical core index and the external cladding is comprised between $-1.0 \times 10^{-3}$ and $0.8 \times 10^{-3}$.
- the difference in index between the outer depressed cladding and the external cladding is comprised between $-18 \times 10^{-3}$ and $-12 \times 10^{-3}$.
- the difference in distance between the third radius and the second radius is comprised between 2.4 $\mu$m and 10 $\mu$m.
- the decrease in overfilled-launch bandwidth between the overfilled-launch bandwidth measured on 500 m and the overfilled-launch bandwidth measured on 8 km at a wavelength of 850 nm is inferior to 10%.
- the decrease in overfilled-launch bandwidth between the overfilled-launch bandwidth measured on 500 m and the overfilled-launch bandwidth measured on 8 km at a wavelength of 1300 nm is inferior to 30%.
- the core size at 850 nm measured at 2m with the near-field technique is equal to the first radius plus or minus 2 $\mu$m.
- the difference in index between the trench and the outer depressed cladding is comprised between $-6 \times 10^{-3}$ and $-2 \times 10^{-3}$.
- the difference in index between the trench and the external cladding is comprised between $-24 \times 10^{-3}$ and $-14 \times 10^{-3}$.
- the difference in index between the inner depressed cladding and the outer depressed cladding is comprised between $-2 \times 10^{-3}$ and $2 \times 10^{-3}$.

- alpha is comprised between 1.9 and 2.1.
- the overfilled-launch bandwidth at a wavelength of 850 nm is superior to 500 MHz.km, and preferably superior to 1000 MHz.km.
- the overfilled-launch bandwidth at a wavelength of 1300 nm is superior to 500 MHz.km, and preferably superior to 1000 MHz.km.

It is also proposed a method for manufacturing an optical fibre as previously described.

Further features and advantages of the invention will appear from the following description of embodiments of the invention, given as non-limiting examples, with reference to the accompanying drawings listed hereunder.

Fig. 1 shows an index profile of a depressed graded-index fibre without depressed trench in the inner cladding;
Fig. 2 shows an index profile of an example of fibre according to the invention;
Fig. 3 shows the evolution of the core size with the fibre length;
Fig. 4 and Fig. 5 show the evolution of the radius of the refractive index profile and of near field intensity at several distances respectively for examples T4 and T6;
Fig. 6 shows a graph of losses as a function of the group mode number for several fibres.

The idea of the invention is to reduce the leakage losses of the down-doped MMF by adding a trench between a graded-index core and an external cladding. Basically, the biggest the trench is, the lowest the leakage losses are. But, it also allows additional "leaky modes" to co-propagate with the usual guided modes of the core. These "leaky modes" can significantly disturb the near field pattern observed at the output of a 2m sample of a fibre sample and overestimate the graded-index core size. In addition, these additional leaky modes can significantly disturb the far field pattern observed at the output of a 2m sample of a fibre sample and overestimate the index difference of the graded-index.

The position and dimensions of the trench has to be chosen with care in order to minimize the leakage losses of the core modes, to limit the presence of additional "leaky modes" due to the trench by maximizing their leakage losses and to avoid degradation of the bandwidth. The reduction of leakage losses in the core prevents reduction of core-size and/or numerical aperture as well as disturbances of the bandwidth over length. Limiting the presence of additional "leaky modes" due to the trench is important in so far as they can propagate over several meters and can lead to wrong estimation of the graded-index core dimensions. As the core dimensions are relevant for assessing the performance for connectivity, a good control of the "leaky modes" is therefore critical for connectivity purpose.

Therefore, a dedicated architecture of a trench-assisted depressed graded index multimode fibre is proposed. Figure 2 is an index profile of an example of fibre having such specific architecture. The fibre comprises a core region with a first radius R1 and a first inner cladding extending radially from the first radius R1 to a second radius R2. The optical index of the inner cladding has a substantially constant over the whole width of the optical cladding. The width w1 corresponds to the difference in size between the second radius R2 and the first radius R1. Preferably, the width w1 of the first inner cladding is comprised between 0.6 $\mu$m and 3.5 5 $\mu$m. More preferably, the width w1 is comprised between 0.8 $\mu$m and 2.5 $\mu$m. This enables to provide the fibre according to the invention with improved properties in term of core size, without deteriorating the bandwidth.

The core has an alpha optical index profile with respect to the inner optical cladding. The parameter alpha can be comprised between 1.9 and 2.1. According to the specific example of Figure 1, the value of alpha is 1.95. The core of the fibre according to the example of Figure 1 has a radius R1 typical of a multimode fibre. The radius of the core can be, for example, a maximum of 36.25 $\mu$m. Preferably, the radius R1 of the core can be comprised between 23 $\mu$m and 27 $\mu$m, and preferably 25.5 $\mu$m.

The difference in index $\Delta n_1$ between the maximal optical core index and the external cladding may be comprised between -1.0 x$10^{-3}$ and 0.8x$10^{-3}$.

The fibre further comprises a trench extending from the second radius R2 to a third radius R3 and an outer depressed cladding extending radially from the third radius R3 to a fourth radius R4. Beyond the fourth radius R4, an external cladding extends radially. The external cladding is preferably derived from the substrate tube in which deposition of glass layers took place during preform manufacturing.

The trench can be defined by its width w2 and its depth $\Delta n_{trench}$. The width w2 corresponds to the difference in distance between the third radius R3 and the second radius R2. Preferably, the width w2 of the trench is comprised between 2.4 $\mu$m and 10 $\mu$m. The depth $\Delta n_{trench}$ corresponds to the difference in index between the trench and the outer depressed cladding. Such difference in index between the trench and the outer depressed cladding is comprised between -6x$10^{-3}$ and -2x$10^{-3}$.

In addition, the trench can be defined by its volume $V_{trench}$. The volume of the trench $V_{trench}$ can be expressed mathematically as:

$$V_{trench} = 2\pi \left| \int\limits_{R2}^{R3} \Delta n_{trench}(r) r dr \right|$$

The volume of the trench is comprised between 1650x10$^{-3}$ $\mu$m$^2$ and 4500 x10$^{-3}$ $\mu$m$^2$. More preferably, the volume of the trench is comprised between 3000x10$^{-3}$ $\mu$m$^2$ and 4000x10$^{-3}$ $\mu$m$^2$. This enables to provide the fibre according to the invention with improved properties. Notably, such fibres will have low loss depressed-graded index 50 $\mu$m multimode fibre in which the leakage losses are managed to allow a reduced outer core radius, resulting in an easier manufacturing with the other properties of the fibre maintained.

The relative difference in index between the different areas of the fibre according to Figure 1 can be further specified. The difference in index $\Delta n_2$ between the outer depressed cladding and the external cladding may be comprised between - 18x10$^{-3}$ and -12.10$^{-3}$. This means the difference in index between the trench and the external cladding may be comprised between -24 x10$^{-3}$ and -14 x10$^{-3}$. This difference in index between the trench and the external cladding corresponds to $\Delta n_{trench} + \Delta n_2$.

In alternative, the difference in index between the inner depressed cladding and the outer depressed cladding may be comprised between -2 x10$^{-3}$ and 2x10$^{-3}$. This difference in index between the inner depressed cladding and the outer depressed cladding corresponds to $\Delta n_{inner} - \Delta n_2$. Thus, this feature can be expressed mathematically as $\Delta n_{inner} = \Delta n_2 \pm 2x10^{-3}$.

For the fibre according to Figure 2, the fourth radius R4 is comprised between 30 $\mu$m and 47 $\mu$m. Preferably, the radius R4 may be comprised between 30 $\mu$m and 45 $\mu$m.

Compared to a down-doped multimode fibre with same core dimensions and same external cladding position (i.e radius R4 comprised between 30 $\mu$m and 45 $\mu$m) but no trench (Figure 1), a multimode optical fibre having the structure of Figure 2, and more specifically the combination of a volume of the trench comprised between 1650 x 10$^{-3}$ $\mu$m$^2$ and 4500 x 10$^{-3}$ $\mu$m$^2$, , a difference in distance between the second radius R2 and the first radius R1 comprised between 0.6$\mu$m and 3.6$\mu$m and difference in distance between the third radius R3 and the second radius R2 comprised between 2 $\mu$m and 10 $\mu$m, is a fibre having a fibre quality improved. Indeed, the attenuation as well as the fibre length dependence of bandwidths, core size and numerical aperture are reduced for a given external cladding position. Furthermore, such optical fibre enables to reduce the manufacturing costs by bringing the external cladding closer to the graded-index core, without deteriorating the fibres characteristics (bandwidths, core size, numerical aperture, and attenuation) compared to the down-doped multimode fibre with same core dimensions but no trench.

These advantages will appear more clearly by reference to tables I and II which compare the properties of different examples of profiles. All the examples described in Tables I and II have similar graded-index central core. But different external cladding positions and various trench characteristics are presented.

Table I gives the different parameters of the architecture chosen for the twelve examples. For each example, the different values given are the value of the fourth radius R4, the value of the first radius R1, the value of $\Delta n_1 - \Delta n_2$, the depth of the trench $\Delta n_{trench}$, the width w1 of the inner depressed cladding, the width w2 of the trench and the volume of the trench. For each example, the value of alpha is fixed to 1.96. In addition, in the present examples of Table I, the value of $\Delta n_{inner}$ is equal to $\Delta n_2$.

Table I: Characteristics of the parameters of the index of several examples.

| Profiles | R4 ($\mu$m) | R1 ($\mu$m) | $\Delta n_1$ | $\Delta n_1 - \Delta n_2$ (10$^{-3}$) | $\Delta n_{trench}$ (10$^{-3}$) | w1 ($\mu$m) | w2 ($\mu$m) | Trench volume (10$^{-3}$ $\mu$m$^3$) |
|---|---|---|---|---|---|---|---|---|
| Example 1 | 40 | 25.5 | -0.6 | 15.8 | 0 | *n.a | n.a | 0 |
| Example T1 | 40 | 25.5 | -0.6 | 15.8 | -2 | 1 | 8.5 | 3285 |
| Example T2 | 40 | 25.5 | -0.6 | 15.8 | -3 | 1 | 7.5 | 4276 |
| Example T3 | 40 | 25.5 | -0.6 | 15.8 | -3 | 1 | 3 | 1583 |
| Example T4 | 40 | 25.5 | -0.6 | 15.8 | -4 | 0.8 | 5 | 3619 |

(continued)

| Profiles | R4 (μm) | R1 (μm) | $\Delta n_1$ | $\Delta n_1 - \Delta n_2$ ($10^{-3}$) | $\Delta n_{trench}$ ($10^{-3}$) | w1 (μm) | w2 (μm) | Trench volume ($10^{-3}$ μm³) |
|---|---|---|---|---|---|---|---|---|
| Example T5 | 40 | 25.5 | -0.6 | 15.8 | -4 | 1.5 | 5 | 3707 |
| Example T6 | 40 | 25.5 | -0.6 | 15.8 | -4 | 7 | 5 | 4398 |
| Example 2 | 35 | 25.5 | -0.6 | 15.8 | 0 | n.a | n.a | 0 |
| Example T7 | 35 | 25.5 | -0.6 | 15.8 | -4 | 1.5 | 5 | 3707 |
| Example T8 | 35 | 25.5 | -0.6 | 15.8 | -4 | 0.5 | 5 | 3581 |
| Example T9 | 35 | 25.5 | -0.6 | 15.8 | -7 | 1.5 | 5 | 6487 |
| Example T10 | 35 | 25.5 | -0.6 | 15.8 | -7 | 5 | 4.5 | 6482 |
| Example T11 | 46.5 | 26.2 | -0.9 | 15.7 | -3.6 | 1.5 | 5.5 | 3701 |
| Example T12 | 32 | 25 | -0.6 | 15.8 | -5 | 2 | 4.5 | 3707 |
| Example 3 | 41 | 25 | -0.6 | 15.8 | 0 | n.a | n.a | 0 |
| (*) n.a : not applicable | | | | | | | | |

Table II provides the properties of several examples. The Overfilled-launch bandwidth is given for two wavelengths: 850 nm and 1300 nm and measured at 1 km (this can be noted by the acronym OFL-BW). Overfilled-launch bandwidth is the originally standardized fibre bandwidth measurement method in which the overfilled-launch bandwidth measurement test setup is defined by the FOTP-204 standard. Therefore, the source used launches light uniformly into all modes of the multimode fibre. All the modes being uniformly launches, this measurement method is particularly accurate to detect any leakage losses, especially in the highest order modes having the lowest effective indexes and so, the highest leakage losses when overfilled-launch bandwidth of one fibre is measured over different fibre lengths. In order to improve the reproducibility of bandwidth measurements, it has been chosen to filter the overfilled-launch modes with a large core step index fibre having a core diameter larger than 55 μm and a numerical aperture of 0.210 ± 0.01. The large core step index fibre should be 2 m ± 0.2 m in length and coupled in the fibre under test. Therefore, the overfilled-launch bandwidth measured over 500 m is compared with the overfilled-launch bandwidth measured over 8 km. The difference bandwidth is expressed in relative percentage and corresponds to the loss in bandwidth between the bandwidth measured at 500 m and the bandwidth measured at 8 km. In the remainder of the description, this overfilled-launch bandwidth difference will be noted $\Delta B$. This bandwidth difference $\Delta B$ can be used as a key indicator of leakage losses. This value of $\Delta B$ will be given for two wavelengths, which are 850 nm and 1300 nm. The core size measured according to the well-known standardized IEC 60793-1-20 Method C, without curve fitting i.e. directly from the measured pattern at the k level, with k=2.5% is also given at the wavelength of 850 nm. This method consists in determining the cross-sectional diameter of the graded-index core of the optical fibre by analyzing the near field light distribution - also called near field pattern - on a cross-section at the end of a 2m-long fibre under OFL and by calculating the core diameter with or without curve fitting. In the remainder of the description, this core size is noted $\Phi_{core}$. This value should be compared to the graded-index core diameter.

Table II: Properties of several examples.

| Profiles | OFL-Bandwidth at 1 km | | ΔB | | Core size (μm) 850 nm, 2m |
|---|---|---|---|---|---|
| | 850 nm MHz.km | 1300 nm MHz.km | 850 nm | 1300 nm | |
| Example 1 | 1850 | 1450 | 4.0% | 31.2% | 50.8 |
| Example T1 | 1900 | 1660 | 0.5% | 13.0% | 52.6 |
| Example T2 | 4170 | 1700 | 0.1% | -0.9% | 52.4 |
| Example T3 | 3250 | 1830 | 10.0% | 5.5% | 51.3 |
| Example T4 | 2225 | 640 | 0.2% | 22.5% | 51.5 |
| Example T5 | 2010 | 1990 | 0.2% | 9.3% | 52.7 |
| Example T6 | 1120 | 1035 | 0.9% | 5.1% | 62.2 |
| Example 2 | 1970 | 2110 | 11.3% | 39.6% | 49.7 |
| Example T7 | 2015 | 2140 | 2.9% | 3.7% | 52.7 |
| Example T8 | 1690 | 590 | 1.2% | 40.9% | 51.6 |
| Example T9 | 3250 | 875 | 2.0% | 24.6% | 53.2 |
| Example T10 | 1225 | 1220 | 0.4% | 4.3% | 59.9 |
| Example T11 | 3341 | 1600 | 0.2% | 0.4% | 53.7 |
| Example T12 | 3096 | 1834 | 6.0% | 6.9% | 49.6 |
| Example 3 | 2025 | 1148 | 1.2% | 11.1% | 49.9 |

## EXAMPLE T1

Example T1 is an example of structure which is according to Figure 2. In this case, the first radius R1 is equal to 25.5 μm and the fourth radius R4 is equal to 40 μm. The value of $\Delta n_1 - \Delta n_2$ is equal $15.8 \times 10^{-3}$. The trench has a depth equal to $\Delta n_{trench} = -2.10^{-3}$, a volume $V_{trench}$ of $3285.10^{-3}$ μm² and a width w2 of 8.5 μm. In addition, the trench is located at a distance w1=1 μm from the end of the core.

Different properties are given in Table II. More specifically, the overfilled-launch bandwidth measured on 1 km reaches 1900 MHz.km for the wavelength of 850 nm and 1660 MHz.km for the wavelength of 1300 nm. In addition, the value of ΔB is respectively 0.5% and 13.0% for the wavelengths of 850 nm and 1300 nm. It can be noticed that the value of ΔB is below 10% for the wavelength of 850 nm and below 30% for the wavelength of 1350 nm. Furthermore, the core size $\Phi_{core}$ is equal to 52.6 μm.

Example T1 should be compared to example 1. Example 1 corresponds to a down-doped multimode fibre with same core dimensions and external cladding positioned at same radius from the centre of the core, but no trench. Accordingly, in the case of example 1, the values of the first radius R1, the fourth radius R4 and of $\Delta n_1 - \Delta n_2$ are the ones of example T1, whereas, as expected, the values $\Delta n_{trench}$ and the volume of the trench $V_{trench}$, are equal to 0.

In addition, the fibre according to example 1 exhibits an overfilled-launch bandwidth measured on 1 km, which reaches 1850 MHz.km for the wavelength of 850 nm and 1450 MHz.km for the wavelength of 1300 nm. In addition, the value of ΔB is respectively 4.0% and 31.2% for the wavelengths of 850 nm and 1300 nm. Furthermore, the core size $\Phi_{core}$ is equal to 50.8 μm.

Thus, the fibre according to example T1 has a value of ΔB, which is reduced at both 850 nm and 1300 nm wavelengths. In addition, the add of trench do not penalize the overfilled-launch bandwidth, since even better overfilled-launch bandwidth measured over 1 km for the wavelengths of 850 nm and 1300 nm than the fibre according to example 1 are obtained. Furthermore, effect of additional leaky-modes sustained by the trench is limited, since core size measured on a 2 m fibre does not differ of more than 2 μm from the diameter of the graded-index core.

The difference between the fibre according to example T1 and example 1 can be explained by the difference of structure between the two fibres. Indeed, the external cladding being too close to the graded-index core in the case of example 1, the leakage losses of the highest-order core modes are too high. Consequently, the highest-order core modes are strongly attenuated with fibre length, and do not contribute anymore to the modal bandwidth calculation. Number of modes sustained by the fibre being strongly reduced with fibre length, the overfilled-launch bandwidth will increase with fibre length whereas core size will decrease. So the overfilled-launch bandwidth becomes strongly dependent on fibre length, especially at 1300 nm (superior to 30%) where leakage losses are higher. Furthermore, we can expect higher attenuation than for a fibre with optimized trench.

Thus, example T1 is a fibre having a fibre quality improved compared to example 1. Indeed, the attenuation as well as the length dependence of bandwidths, core size and numerical aperture are reduced for a given external cladding position.

EXAMPLE T2

Example T2 is an example of structure, which is according to Figure 2. Compared to example T1, example T2 presents the same features except for the trench. According to example T2, the trench has a depth equal to $\Delta n_{trench}$ = -3.10$^{-3}$, a volume $V_{trench}$ of 4276.10$^{-3}$ $\mu m^2$ and a width w2 of 7.5 $\mu m$. The distance between the graded-index core and the trench is not modified.

Different properties of the fibre according to example to T2 are given in Table II. More specifically, the overfilled-launch bandwidth measured over 1 km reaches 4170 MHz.km for the wavelength of 850 nm and 1700 MHz.km for the wavelength of 1300 nm. In addition, the value of AB is respectively 0.1% and -0.9% for the wavelengths of 850 nm and 1300 nm. It can be noticed that the value of $\Delta B$ is below 10% for the wavelength of 850 nm and below 30% for the wavelength of 1300 nm. Furthermore, the core size $\Phi_{core}$ is equal to 52.4 $\mu m$.

Example T2 should also be compared to example 1. The fibre according to example T2 has a value of $\Delta B$, which is reduced at both 850nm and 1300nm wavelengths. In addition, adding a trench does not penalize the overfilled-launch bandwidth, since even better bandwidth measured over 1 km for the wavelengths of 850 nm and 1300 nm than the fibre according to example 1 are obtained. Furthermore, effect of additional leaky-modes sustained by the trench is limited, since core size measured on a 2 m fibre does not differ of more than 2 $\mu m$ from the diameter of the graded-index core. Therefore, similarly to the example T1, the fibre according to the example T2 has a fibre quality improved compared to example 1. Indeed, the attenuation as well as the length dependence of overfilled-launch bandwidth, core size and numerical aperture are reduced for a given external cladding position.

EXAMPLE T3

Compared to Example T2, in the structure according to example T3, the width w2 of the trench is much smaller and is equal to 3 $\mu m$ whereas the trench depth and its distance from the graded-index core are unchanged. Consequently, the volume of the trench is smaller too and equal to 1583.10$^{-3}$ $\mu m^2$. In this specific case, the value of the third radius R3 is 29.5 $\mu m$. Therefore, the example T3 is only shown here as an illustration for the sake of comparison.

In the case of Example T3, the value of $\Delta B$ is respectively 10.0% and 5.5% for the wavelengths of 850 nm and 1300 nm. The value of $\Delta B$ is so strongly increased for the wavelength of 850 nm compared to examples T1 and T2 having the same external cladding position but larger trench volume. Such volume of a trench is not sufficient to limit the leakage losses of the highest-order core modes, especially at 850nm. As a consequence, the fibre suffers from strong fibre length dependence of overfilled-launch bandwidth.

EXAMPLE T4

Example T4 is another example of structure, which is according to Figure 2. The trench has a depth equal to $\Delta n_{trench}$ = -4.10$^{-3}$, a volume $V_{trench}$ of 3619.10$^{-3}$ $\mu m^2$ and a width w2 of 5 $\mu m$. The width w1 of the inner depressed cladding is equal to 0.8 $\mu m$.

By referring to Table II, in the case of Example T4, the overfilled-launch bandwidth measured over 1 km reaches 2225 MHz.km for the wavelength of 850 nm and 640 MHz.km for the wavelength of 1300 nm. In addition, the value of $\Delta B$ is respectively 0.2% and 22.5% for the wavelengths of 850 nm and 1300 nm. It can be noticed that the value of $\Delta B$ is below 10% for the wavelength of 850 nm and below 30% for the wavelength of 1300 nm. Furthermore, the core size $\Phi_{core}$ on 2 m using the near field technique is equal to 52.4 $\mu m$.

Example T4 should be compared to example 1. The value of $\Delta B$ is reduced for both wavelengths and more especially at 850 nm Therefore, the leakage losses have been particularly reduced at 850 nm, compared to same fibre without trench.

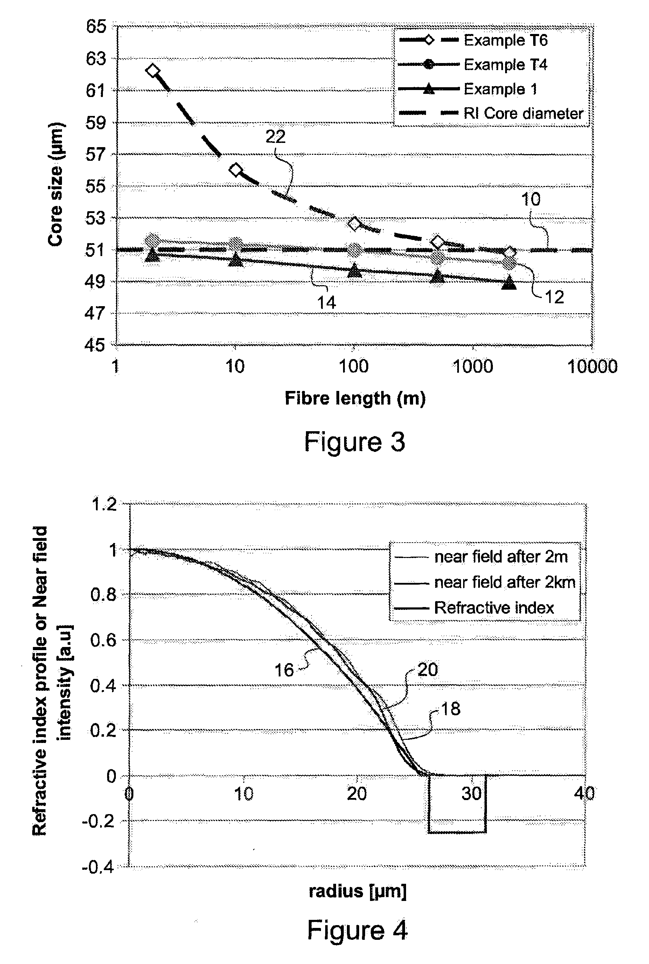

The comparison between the core size for the examples 1 and the example T4 can be further refined by reference to Figure 3. Indeed, Figure 3 shows the evolution of the core size with the fibre length, and notably between 2 m and 2 km. The curve 10 represents the level of the diameter of the graded- index core. This is a parameter of the refractive index, thus independent of fibre length and equal to 51 $\mu m$ in the present example. Figure 3 also comprises curves 12 and 14 which represent the evolution of the core size with the fibre length respectively for the examples T4 and 1. The comparison of curves 12 and 14 shows that the core size measured for curve 12 is nearer to the curve 10 than curve 14 and less fibre length dependant Thus, this means that the fibre according to Example T4 has better properties than the fibre according to Example 1. This notably shows that the leakage losses are lower in the case of Example T4. In other words, the optimized trench of example T4 allows to confine the modes of the graded-index core (lowest length dependence) while limiting the presence of additional "leaky modes" introduced by the trench (core size close to graded-index core diameter).

This is also shown by Figure 4 which is a graph of the radial profile of the refractive index and of the radial profile of the near field intensity measured after 2 m and after 2 km, in arbitrary units. More precisely, curve 16 represents the refractive index profile, curve 18 the near field intensity after 2 m and curve 20 the near field intensity after 2 km. The observation of Figure 4 shows that fibre length only slightly modifies the near field pattern and that near field pattern is very close to the graded-index core of refractive index profile. This is a schematic representation of the good properties of the fibre according to Example T4.

Therefore, similarly to the fibres according to the examples T1 and T2, the fibre according to the example T4 has a fibre quality improved compared to example 1. Indeed, the attenuation as well as the length dependence of overfilled-launch bandwidth, core size and numerical aperture are reduced for a given external cladding position.

EXAMPLE T5

Example T5 is another example of structure, which is according to Figure 2. The trench has a depth equal to $\Delta n_{trench} = -4.10^{-3}$, a volume of $V_{trench}$ of $3707.10^{-3}$ $\mu m^2$ and a width w2 of 5 $\mu m$. The width w1 of the inner depressed cladding is equal to 1.5 $\mu m$.

Different properties of the fibre according to example to T5 are given in Table II. More specifically, the value of $\Delta B$ is respectively 0.2% and 9.3% for the wavelengths of 850 nm and 1300 nm. It can be noticed that the value of $\Delta B$ is below 10% for the wavelength of 850 nm and below 30% for the wavelength of 1300 nm. Furthermore, the core size $\Phi_{core}$ is equal to 52.47 $\mu m$, which means that the core diameter is equal to graded-index core diameter plus or minus 2 $\mu m$. Adding the trench of same width and same index further from the core, compared to example T4, allow improving OFL-BW and $\Delta B$ at 1300nm with limited impact at 850nm. But the core size measurement is more corrupted (larger core size on 2m than example T4). But it is still less than 2$\mu m$ higher.

Example T5 should also be compared to example 1. The value of $\Delta B$ is reduced for both wavelengths..

Therefore, similarly to the fibres according to the example T1, the example T2 and the example T4, the fibre according to the example T5 has a fibre quality improved compared to example 1. This notably shows that the leakage losses are lower in the case of Example T5. Indeed, the attenuation as well as the length dependence of overfilled-launch bandwidth, core size and numerical aperture are reduced for a given external cladding position.

EXAMPLE T6

Example T6 is an example of structure, which is according to Figure 2. Compared to example T4 and example T5, example T6 presents the same features, i.e same graded-index core, same trench index and same trench width, but the location of the trench is modified. According to example T6, the trench has a depth equal to $\Delta n_{trench} = -4.10^{-3}$, a volume $V_{trench}$ of $4398.10^{-3}$ $\mu m^2$ and a width w2 of 5 $\mu m$. The width w1 of the inner depressed cladding is equal to 7 $\mu m$. In this specific case, the value of width w1 is superior to 3.5 $\mu m$. Therefore, the example T6 is only shown here as an illustration for the sake of comparison.

By referring to Table II, in the case of Example T6, the overfilled-launch bandwidth over 1 km reaches 1120 MHz.km for the wavelength of 850 nm and 1035 MHz.km for the wavelength of 1300 nm. In addition, the value of $\Delta B$ is respectively 0.9% and 5.1% for the wavelengths of 850 nm and 1300 nm. Furthermore, the core size $\Phi_{core}$ measured on 2 m using the near field technique is equal to 62.2 $\mu m$.

As for example T4 and example T5, the volume of the trench is large enough to limit the leakage losses. Consequently, $\Delta B$ is strongly reduced, compared to comparative example 1, having same core dimensions and same external cladding position but no trench. But the position of the trench of example T6 is not optimized. Additional leaky modes supported by the trench have low leakage losses too and they strongly corrupt the core size measurement. Consequently, the core size measured for the fibre according to Example T6 more than 12 microns higher than the core diameter from refractive index profile. The comparison between the core size for the examples 1 and the example T6 can be further refined by reference to Figure 3. Indeed, Figure 3 shows the evolution of the core size with the fibre length, and notably between 2 m and 2 km. The curve 22 represents the evolution of the core size with the fibre length respectively for the example T6. The comparison of curves 14 and 22 shows that the core diameter measured for curve 14 is nearer to the curve 10 than curve 22. This can be explained by the fact that Example T6 has a trench too far from the core. As a consequence, too many "leaky modes" appear because of that trench, which increases the core size if measurement is carried out on a short length.

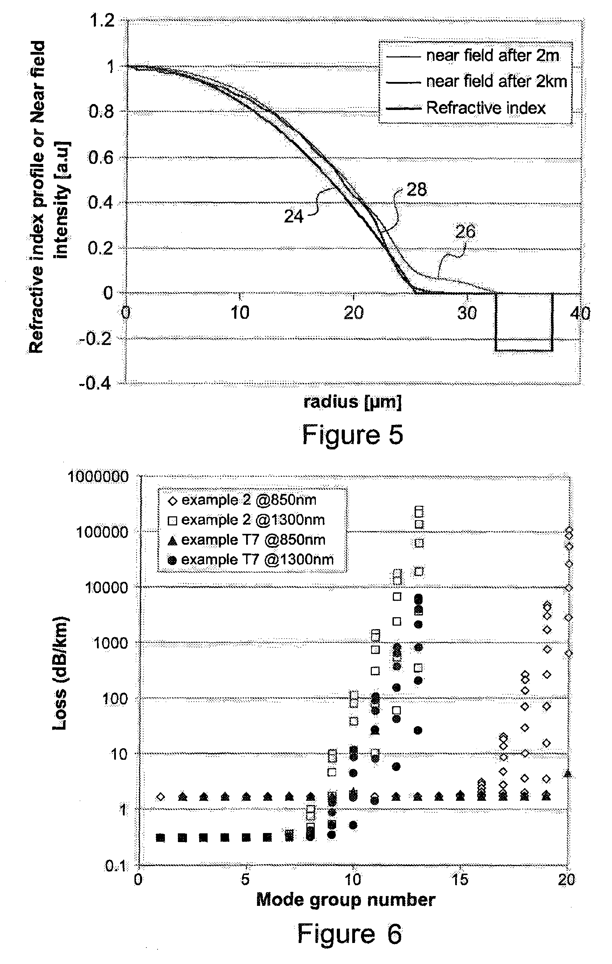

This is also shown by Figure 5, which is a graph wherein the evolution with the radius of the refractive index profile and of near field intensity at several distance in arbitrary units for the fibre according to the Example T6. More precisely, curve 24 represents the refractive index profile, curve 26 the near field intensity after 2 m and curve 28 the near field intensity after 2 km. The observation of Figure 5 shows that radius dependence of near field strongly depends on fibre length. The cross sectional diameter of the graded-index core determined by analyzing curve 26 according to the IEC 60793-1-20 Method C will be much larger than the one measured by analyzing curve 28. This is a schematic representation that the fibre according to Example T6 does not have the same property regarding the "leaky modes" as the fibre according to Example T4. Indeed, for example T6, the trench is too far from the core. As a consequence, too many "leaky modes" appear because of that trench, which increases the core size if measurement is carried out on a short length.

EXAMPLE T7

Example T7 is an example of structure, which is according to Figure 2. In this case, the first radius R1 is equal to 25.5 $\mu$m and the fourth radius R4 is equal to 35 $\mu$m. The value of $\Delta n_1$-$\Delta n_2$ is equal 15.8x10$^{-3}$. The trench has a depth equal to $\Delta n_{trench}$ = -4.10$^{-3}$, a volume $V_{trench}$ of 3707.10$^{-3}$ $\mu$m$^2$ and a width w2 of 5 $\mu$m. In addition, the trench is located at a distance wl=1.5 $\mu$m from the end of the core.

Different properties of the fibre according to example to T7 are given in Table II. More specifically, the overfilled-launch bandwidth measured on 1 km reaches 2015 MHz.km for the wavelength of 850 nm and 2140 MHz.km for the wavelength of 1300 nm. In addition, the value of $\Delta$B is respectively 2.9% and 3.7% for the wavelengths of 850 nm and 1300 nm. It can be noticed that the value of $\Delta$B is below 10% for the wavelength of 850 nm and below 30% for the wavelength of 1300 nm. Furthermore, the core size $\Phi_{core}$ is equal to 52.7 $\mu$m.

Example T7 should also be compared to example 2. Example 2 corresponds to a down-doped multimode fibre with same core dimensions and external cladding positioned at same radius from the centre of the core, but no trench (Figure 1). Accordingly, in the case of example 2, the values of the first radius R1, the fourth radius R4 and of $\Delta n_1$-$\Delta n_2$ are the ones of example T7, whereas, as expected, the values $\Delta n_{trench}$ and the volume of the trench $V_{trench}$ are equal to 0.

In addition, the fibre according to example 2 exhibits an overfilled-launch bandwidth-bandwidth measured on 1 km which reaches 1970 MHz.km for the wavelength of 850 nm and 2110 MHz.km for the wavelength of 1300 nm. In addition, the value of $\Delta$B is respectively 11.3% and 39.6% for the wavelengths of 850 nm and 1300 nm. Furthermore, the core diameter measured $\Phi_{core}$ is equal to 49.7 $\mu$m.

The fibre according to example T7 allows obtaining reduced $\Delta$B, compared to a same fibre without trench, without penalizing the bandwidth. The adding of a trench induces an increase of core size, when measured on 2 m, but to a level which is less than 2 $\mu$m higher than the diameter of the graded-index core of the refractive index. The fact that "leaky modes" are better dealt with the fibre according to Example T7 compared to the fibre according to Example 2 appears when contemplating Figure 6. Figure 6 is a graph representing the losses expressed in dB/km as a function of the mode group number. This evolution is presented for both the fibres according to Example 2 and Example T7 and for two wavelengths, which are 850 nm and 1300 nm. More precisely, the points in form of diamonds concern the losses for the fibre according to Example 2 at the wavelength of 850 nm and the points in form of squares concern the losses for the fibre according to Example 2 at the wavelength of 1300 nm. Furthermore, the points in form of triangles concern the losses for the fibre according to Example T7 at the wavelength of 850 nm and the points in form of circles concern the losses for the fibre according to Example T7 at the wavelength of 1300 nm. As can be seen on Figure 6, the losses of the highest-order core modes of Example 2 are much higher than those of Example T7. Consequently, Example 2 has losses around 2dB/km and 0.8dB/km at 850 nm and 1300nm, respectively, when Example T7 has losses around 1.9 dB/km at 850 nm and around 0.5 dB/km at 1300 nm.

Therefore, the fibre according to the example T7 has a fibre quality improved compared to example 2. Indeed, the attenuation as well as the length dependence of overfilled-launch bandwidth, core size and numerical aperture are reduced for a given external cladding position.

EXAMPLE T8

Compared to example T7, example T8 presents the graded-index core and the same trench depth $\Delta n_{trench}$ and same trench width w2, but the trench is located much closer to the graded-index core, with a width w1 of the inner depressed cladding equal to 0.5$\mu$m. The volume of the trench $V_{trench}$ is equal to 3581.10$^{-3}$ $\mu$m$^2$. In this specific case, the value of width w1 is inferior to 0.6 $\mu$m. Therefore, the example T8 is only shown here as an illustration for the sake of comparison.

In the case of Example T8, the overfilled-launch bandwidth measured on 1 km reaches 1690 MHz.km for the wavelength of 850 nm and 590 MHz.km for the wavelength of 1300 nm. In addition, the value of $\Delta$B is respectively 1.2% and 40.9% for the wavelengths of 850 nm and 1300 nm. Furthermore, the core size $\Phi_{core}$ is equal to 51.6 $\mu$m.

The trench being so close to the graded-index core, the overfilled-launch bandwidths are penalized compared to example T7. Furthermore, although trench volume is very close to the one of example T7, the trench position of example T8 is not optimized to sufficiently reduce $\Delta$B at 1300 nm. Consequently, $\Delta$B is much higher than 30%.

EXAMPLE T9

Example T9 has same profile as example T7, except the trench depth, i.e. same graded-index core, same external cladding position R4, same inner depressed cladding w1 and same trench width w2. The depth of the trench is $\Delta n_{trench}$ = -7.10$^{-3}$. The volume of the trench $V_{trench}$ is equal to 6487.10$^{-3}$ $\mu$m$^2$. In this specific case, the volume of the trench is superior to 4500.10$^{-3}$ $\mu$m$^2$. Therefore, the example T9 is only shown here as an illustration for the sake of comparison.

In the case of Example T9, the overfilled-launch bandwidth measured on 1 km reaches 3250 MHz.km for the wavelength of 850 nm and 875 MHz.km for the wavelength of 1300 nm. In addition, the value of $\Delta B$ is respectively 2.0% and 24.9% for the wavelengths of 850 nm and 1300 nm. Furthermore, the core size $\Phi_{core}$ is equal to 53.2 $\mu$m.

The volume of the trench is large enough to limit the fibre length dependence on overfilled-launch bandwidth, more especially at 850 nm. But trench depth and the trench volume are too large. As a consequence, too many additional leaky modes are supported by the trench and are not attenuated after 2 m. They disturb the near field pattern used for the core size measurement. The core size measured on 2 m using the near field technique is superior to 53 $\mu$m, which means that the core size is not equal to graded-index core diameter plus or minus 2 $\mu$m. This introduces a wrong estimation of the graded-index core diameter and fibre length dependence for core size, which are detrimental for connectivity purpose for instance.

EXAMPLE T10

Example T10 has same index profile as example T9, but with a trench located further from the graded-index core. According to example T10, the trench has a depth equal to $\Delta n_{trench}$ = -7.10$^{-3}$, a volume of the trench $V_{trench}$ of 6482.10$^{-3}$ $\mu$m$^2$ and a width w2 of 4.5 $\mu$m. In addition, the trench is located at a distance w1 = 5 $\mu$m from the end of the core. In this specific case, the volume of the trench is superior to 4500.10$^{-3}$ gm$^2$. Furthermore, the width w1 is superior to 3.5 um. Therefore, the example T10 is only shown here as an illustration for the sake of comparison.

In the case of Example T10, the overfilled-launch bandwidth measured on 1 km reaches 1225 MHz.km for the wavelength of 850 nm and 1220 MHz.km for the wavelength of 1300 nm. In addition, the value of $\Delta B$ is respectively 0.4% and 4.3% for the wavelengths of 850 nm and 1300 nm. Furthermore, the core size $\Phi_{core}$ is equal to 59.9 $\mu$m.

The volume of the trench is large enough to limit the fibre length dependence on overfilled-launch bandwidth, at both 850 nm and 1300 nm. But trench volume is too large, too deep and too far from the graded-index core. As a consequence, there are too many additional leaky modes supported by the trench, which are not attenuated after 2 m. They strongly disturb the near field pattern used for the core size measurement. This introduces a wrong estimation of the graded-index core diameter and fibre length dependence for core size, which are detrimental for connectivity purpose, for instance.

EXAMPLE T11

Example T11 is another example of structure, which is according to Figure 2. The trench has a depth equal to $\Delta n_{trench}$ = -3.6.10$^{-3}$, a volume of $V_{trench}$ of 3701.10$^{-3}$ $\mu$m$^2$ and a width w2 of 5.5 $\mu$m. The width w1 of the inner depressed cladding is equal to 1.5 $\mu$m. The radius R4 is equal to 46.5 $\mu$m in this specific case.

Different properties of the fibre according to example to T11 are given in Table II. More specifically, the value of $\Delta B$ is respectively 0.2% and 0.6% for the wavelengths of 850 nm and 1300 nm. It can be noticed that these values of AB are extremely low. Furthermore, the core size $\Phi_{core}$ is equal to 53.7 $\mu$m, which means that the core diameter is equal to graded-index core diameter plus or minus 2 $\mu$m.

Leakage losses are lower in the case of Example T11. Indeed, the attenuation as well as the length dependence of overfilled-launch bandwidth, core size and numerical aperture are reduced for a given external cladding position.

EXAMPLE T 12

Example T12 is another example of structure, which is according to Figure 2. The trench has a depth equal to $\Delta n_{trench}$ = -5.10$^{-3}$ a volume of $V_{trench}$ of 3707.10$^{-3}$ $\mu$m$^2$ and a width w2 of 4 $\mu$m. The width w1 of the inner depressed cladding is equal to 2 $\mu$m. The radius R4 is equal to 32 $\mu$m in this specific case.

Different properties of the fibre according to example to T12 are given in Table II. More specifically, the value of $\Delta B$ is respectively 6.0% and 6.9% for the wavelengths of 850 nm and 1300 nm. It can be noticed that both values of $\Delta B$ are below 10%. Furthermore, the core size $\Phi_{core}$ is equal to 49.6 $\mu$m, which means that the core diameter is equal to graded-index core diameter plus or minus 2 $\mu$m.

Leakage losses are lower in the case of Example T12. Indeed, the attenuation as well as the length dependence of overfilled-launch bandwidth, core size and numerical aperture are reduced for a given external cladding position.

Another advantage provided by the fibre of example T12 is shown by the comparison of example T12 with example 3. Example 3 corresponds to a down-doped multimode fibre with same core dimensions and exhibiting the same properties with regards to the graded-index core, but no trench (Figure 1). The radius R4 of example 3 is 41 $\mu$m. This means that the external cladding is located further than the external cladding of example T12 to obtain a parameter $\Delta$B inferior to 10% at a wavelength of 850 nm and inferior to 30% at a wavelength of 1300 nm. The external cladding of example 3 is located 9 $\mu$m further compared to example 12. As explained before, manufacturing a depressed fibre with an external cladding positioned closer to the core is easier and cheaper. Therefore, the manufacturing costs for fibre of example T12 are reduced without deteriorating the fibre characteristics (overfilled-launch bandwidths, core size, numerical aperture, attenuation).

Thus, examples T1, T2, T4, T5, T7, T11 and T12 are multimode optical fibres comprising a core region with a first radius R1 and a profile alpha with a maximum optical core index, an inner depressed cladding extending radially from the first radius R1 to a second radius R2, a trench extending from the second radius R2 to a third radius R3, an outer depressed cladding extending radially from the third radius R3 to a fourth radius R4 and an external cladding extending radially from the fourth radius R4. For each fibre according to these examples, the volume of the trench $V_{trench}$ is comprised between 1650x10$^{-3}$ $\mu$m$^2$ and 4500 x10$^{-3}$ $\mu$m$^2$, the difference in distance between the second radius R2 and the first radius R1 is comprised between 0.6 $\mu$m and 3.5 $\mu$m, and the fourth radius R4 is comprised between 30 $\mu$m and 47 $\mu$m. In addition, the difference in distance between the third radius R3 and the second radius R2 may be comprised between 2.4 $\mu$m and 10 $\mu$m.

This enables to obtain fibres exhibiting improved properties. Indeed, such fibres have low loss depressed-graded index 50$\mu$m multimode fibre in which the leakage losses are managed to allow an outer core radius below 47$\mu$m.

In addition, the overfilled-launch bandwidth at a wavelength of 850 nm is superior to 500 MHz.km, and preferably superior to 1000 MHz.km. The overfilled-launch bandwidth at a wavelength of 1300 nm may be superior to 500 MHz.km, and preferably superior to 1000 MHz.km. Further, the core size at 850 nm measured at 2 m with the near-field technique is equal to the first radius plus or minus 2 $\mu$m. In addition, such fibres usually exhibit a decrease in overfilled-launch bandwidth between the bandwidth measured on 500 m and the bandwidth measured on 8 km at a wavelength of 850 nm inferior to 10%. The decrease in overfilled-launch bandwidth for these fibres between the overfilled-launch bandwidth measured on 500 m and the overfilled-launch bandwidth measured on 8 km at a wavelength of 1300 nm may also be inferior to 30%.

Furthermore, such optical fibre enables to reduce the manufacturing costs by bringing the external cladding closer to the graded-index core, without deteriorating the fibres characteristics (overfilled-launch bandwidths, core size, numerical aperture, attenuation).

It is thus proposed a process to manufacture such fibre.

Furthermore, it may be proposed the use of such fibre for reducing the appearance of leaky mode.

The invention has been described with reference to preferred embodiments. However, many variations are possible within the scope of the invention.

### Claims

1. A multimode optical fibre comprising: a core region, an inner depressed cladding, a trench, an outer depressed cladding and an external cladding:

   - the core region having a first radius (R1) and a profile alpha with a maximum optical core index, having a difference in index ($\Delta n_1$) between the maximal optical core index and the external cladding, wherein R1 is comprised between 23 $\mu$m and 27 $\mu$m;
   - the inner depressed cladding extending radially from the first radius (R1) to a second radius R2, whereby the inner depressed cladding is depressed compared with the external cladding- the difference in distance between the second radius R2 and the first radius (R1) is comprised between 0.6 $\mu$m and 3.5 $\mu$m; wherein the difference in index between the inner depressed cladding and the outer depressed cladding corresponds to An$_{inner}$ - $\Delta n_2$, $\Delta n_{inner}$ being the difference in index between the inner depressed cladding and the external cladding and $\Delta n_2$ being the difference in index between the outer depressed cladding and the external cladding;
   - the trench extending from the second radius R2 to a third radius R3, having a width w2 and a depth $\Delta n_{trench}$ corresponding to the difference in index between the trench and the outer depressed cladding, and having a volume $V_{trench}$;
   - the outer depressed cladding extending radially from the third radiuss R3 to a fourth radius (R4), whereby the outer depressed cladding is depressed compared with the external cladding ;
   - an external cladding extending radially from the fourth radius (R4), - the fourth radius (R4) is comprised between 30 $\mu$m and 47 $\mu$m,

wherein the volume of the trench $V_{trench}$ is comprised between $1650 \times 10^{-3}$ $\mu m^2$ and $4500 \times 10^{-3}$ $\mu m^2$ and given by:

$$V_{trench} = 2\pi \left| \int_{R2}^{R3} \Delta n_{trench}(r) r dr \right|.$$

**2.** The fibre of claim 1, wherein the difference in index ($\Delta n_1$) between the maximal optical core index and the external cladding is comprised between $-1.0 \times 10^{-3}$ and $0.8 \times 10^{-3}$.

**3.** The fibre of any one of claim 1 or claim 2, wherein the difference in index ($\Delta n_2$) between the outer depressed cladding and the external cladding is comprised between $-18 \times 10^{-3}$ and $-12 \times 10^{-3}$.

**4.** The fibre of any one of claim 1 to claim 3, wherein the difference in distance between the third radius (R3) and the second radius (R2) is comprised between 2.4 $\mu m$ and 10 $\mu m$.

**5.** The fibre of any one of claim 1 to claim 4, wherein the difference in index ($\Delta n_{trench}$) between the trench and the outer depressed cladding is comprised between $-6 \times 10^{-3}$ and $-2 \times 10^{-3}$.

**6.** The fibre of any one of claim 1 to claim 5, wherein the decrease in overfilled-launch bandwidth between the overfilled-launch bandwidth measured on 500 m and the overfilled-launch bandwidth measured on 8 km (tab) at a wavelength of 850 nm is inferior to 10%.

**7.** The fibre of any one of claim 1 to claim 6, wherein the decrease in overfilled-launch bandwidth between the overfilled-launch bandwidth measured on 500 m and the overfilled-launch bandwidth measured on 8 km ($\Delta B$) at a wavelength of 1300 nm is inferior to 30%.

**8.** The fibre of any one of claim 1 to claim 7, wherein the core size at 850 nm measured at 2m with the near-field technique is equal to the first radius plus or minus 2 pm. ,

**9.** The fibre of any one of claim 1 to claim 8, wherein the difference in index between the trench and the external cladding is comprised between $-24 \times 10^{-3}$ and $-14 \times 10^{-3}$.

**10.** The fibre of any one of claim 1 to claim 9, wherein the difference in index between the inner depressed cladding and the outer depressed cladding is comprised between $-2 \times 10^{-3}$ and $2 \times 10^{-3}$.

**11.** The fibre of any one of claim 1 or claim 10, wherein alpha is comprised between 1.9 and 2.1.

**12.** The fibre of any one of claim 1 to claim 11, wherein the overfilled-launch bandwidth at a wavelength of 850 nm is superior to 500 MHz.km, and preferably superior to 1000 MHz.km.

**13.** The fibre of any one of claim 1 to claim 12, wherein the overfilled-launch bandwidth at a wavelength of 1300 nm is superior to 500 MHz.km, and preferably superior to 1000 MHz.km.

**14.** A method for manufacturing an optical fibre according to any one of claims 1 to 13.

**Patentansprüche**

**1.** Multimoden-Lichtleitfaser, die umfasst: einen Kernbereich, einen inneren abgesenkten Mantel, einen Graben, einen äußeren abgesenkten Mantel und einen äußeren Mantel:

- wobei der Kernbereich einen ersten Radius (R1) und ein Profil Alpha mit einem maximalen optischen Index des Kerns und einer Indexdifferenz ($\Delta n_1$) zwischen dem maximalen optischen Index des Kerns und dem äußeren Mantel besitzt, wobei R1 im Bereich von 23 $\mu m$ bis 27 $\mu m$ liegt;
- der innere abgesenkte Mantel sich von dem ersten Radius (R1) radial zu einem zweiten Radius (R2) erstreckt, wobei der innere abgesenkte Mantel im Vergleich zu dem äußeren Mantel abgesenkt ist - die Abstandsdifferenz zwischen dem zweiten Radius R2 und dem ersten Radius R1 liegt im Bereich von 0,6 $\mu m$ bis 3,5 $\mu m$; wobei

die Indexdifferenz zwischen dem inneren abgesenkten Mantel und dem äußeren abgesenkten Mantel $\Delta n_{inner}$ - $\Delta n_2$ entspricht, wobei $\Delta n_{inner}$ die Indexdifferenz zwischen dem inneren abgesenkten Mantel und dem äußeren Mantel ist und $\Delta n_2$ die Indexdifferenz zwischen dem äußeren abgesenkten Mantel und dem äußeren Mantel ist,
- wobei sich der Graben von dem zweiten Radius R2 zu einem dritten Radius R3 erstreckt und eine Breite w2 und eine Tiefe $\Delta n_{trench}$, die der Indexdifferenz zwischen dem Graben und dem äußeren abgesenkten Mantel entspricht, und ein Volumen $V_{trench}$ besitzt;
- wobei sich der äußere abgesenkte Mantel von dem dritten Radius R3 radial zu einem vierten Radius (R4) erstreckt; wobei der äußere abgesenkte Mantel im Vergleich zu dem äußeren Mantel abgesenkt ist;
- wobei sich ein äußerer Mantel von dem vierten Radius (R4) radial erstreckt - der vierte Radius R4 liegt im Bereich von 30 $\mu$m bis 47 $\mu$m,

wobei das Volumen des Grabens $V_{rench}$ im Bereich von 1650 $\times$ 10$^{-3}$ $\mu$m$^2$ bis 4500 $\times$ 10$^{-3}$ $\mu$m$^2$ liegt und gegeben ist durch:

$$V_{trench} = 2\pi \left| \int_{R2}^{R3} \Delta n_{trench}(r)\, r\, dr \right|$$

2. Faser nach Anspruch 1, wobei die Indexdifferenz ($\Delta n_1$) zwischen dem maximalen optischen Index des Kerns und dem äußeren Mantel im Bereich von -1,0 $\times$ 10$^{-3}$ bis 0,8 $\times$ 10$^{-3}$ liegt.

3. Faser nach Anspruch 1 oder Anspruch 2, wobei die Indexdifferenz ($\Delta n_2$) zwischen dem äußeren abgesenkten Mantel und dem äußeren Mantel im Bereich von -18 $\times$ 10$^{-3}$ bis -12 $\times$ 10$^{-3}$ liegt.

4. Faser nach einem der Ansprüche 1 bis 3, wobei die Abstandsdifferenz zwischen dem dritten Radius (R3) und dem zweiten Radius (R2) im Bereich von 2,4 $\mu$m bis 10 $\mu$m liegt.

5. Faser nach einem der Ansprüche 1 bis 4, wobei die Indexdifferenz ($\Delta n_{trench}$) zwischen dem Graben und dem äußeren abgesenkten Mantel im Bereich von -6 $\times$ 10$^{-3}$ bis -2 $\times$ 10$^{-3}$ liegt.

6. Faser nach einem der Ansprüche 1 bis 5, wobei die Abnahme der Bandbreite bei überfüllter Einkopplung zwischen der Bandbreite für überfüllte Einkopplung, die für 500 m gemessen wird, und der Bandbreite für überfüllte Einkopplung, die für 8 km gemessen wird ($\Delta$B), bei einer Wellenlänge von 850 nm kleiner als 10 % ist.

7. Faser nach einem der Ansprüche 1 bis 6, wobei die Abnahme der Bandbreite für überfüllte Einkopplung zwischen der Bandbreite für überfüllte Einkopplung, die für 500 m gemessen wird, und der Bandbreite für überfüllte Einkopplung, die für 8 km gemessen wird ($\Delta$B), bei einer Wellenlänge von 1300 nm kleiner als 30 % ist.

8. Faser nach einem der Ansprüche 1 bis 7, wobei die Kerngröße bei 850 nm, die bei 2 m mit der Nahbereichstechnik gemessen wird, gleich dem ersten Radius plus oder minus 2 $\mu$m ist.

9. Faser nach einem der Ansprüche 1 bis 8, wobei die Indexdifferenz zwischen dem Graben und dem äußeren Mantel im Bereich von -24 $\times$ 10$^{-3}$ bis -14 $\times$ 10$^{-3}$ liegt.

10. Faser nach einem der Ansprüche 1 bis 9, wobei die Indexdifferenz zwischen dem inneren abgesenkten Mantel und dem äußeren abgesenkten Mantel im Bereich von -2 $\times$ 10$^{-3}$ bis 2 $\times$ 10$^{-3}$ liegt.

11. Faser nach einem der Ansprüche 1 bis 10, wobei Alpha im Bereich von 1,9 bis 2,1 liegt.

12. Faser nach einem der Ansprüche 1 bis 11, wobei die Bandbreite für überfüllte Einkopplung bei einer Wellenlänge von 850 nm größer als 500 MHz · km und vorzugsweise größer als 1000 MHz · km ist.

13. Faser nach einem der Ansprüche 1 bis 12, wobei die Bandbreite für überfüllte Einkopplung bei einer Wellenlänge von 1300 nm größer als 500 MHz · km und vorzugsweise größer als 1000 MHz · km ist.

14. Verfahren zum Herstellen einer Lichtleitfaser nach einem der Ansprüche 1 bis 13.

**Revendications**

1. Fibre optique multimode comprenant: une région d'âme, une gaine déprimée intérieure, une tranchée, une gaine déprimée extérieure et une gaine externe :

   - la région d'âme ayant un premier rayon (R1) et un profil alpha avec un indice maximal d'âme optique, ayant une différence d'indice ($\Delta n_1$) entre l'indice maximal d'âme optique et la gaine externe, dans laquelle R1 est compris entre 23 $\mu$m et 27 $\mu$m ;
   - la gaine déprimée intérieure s'étendant radialement du premier rayon (R1) à un deuxième rayon R2, moyennant quoi la gaine déprimée intérieure est déprimée par comparaison à la gaine externe - la différence de distance entre le deuxième rayon R2 et le premier rayon (R1) est comprise entre 0,6 $\mu$m et 3,5 $\mu$m ; dans laquelle la différence d'indice entre la gaine déprimée intérieure et la gaine déprimée extérieure correspond à $\Delta n_{inner}$- $\Delta n_2$, $\Delta n_{inner}$ étant la différence d'indice entre la gaine déprimée intérieure et la gaine externe et $\Delta n_2$ étant la différence d'indice entre la gaine déprimée extérieure et la gaine externe ;
   - la tranchée s'étendant du deuxième rayon R2 à un troisième rayon R3, ayant une largeur w2 et une profondeur $\Delta n_{trench}$ correspondant à la différence d'indice entre la tranchée et la gaine déprimée extérieure, et ayant un volume $V_{trench}$ ;
   - la gaine déprimée extérieure s'étendant radialement du troisième rayon R3 à un quatrième rayon (R4) ; moyennant quoi la gaine déprimée extérieure est déprimée par comparaison à la gaine externe ;
   - une gaine externe s'étendant radialement depuis le quatrième rayon (R4), - le quatrième rayon (R4) est compris entre 30 $\mu$m et 47 $\mu$m,

   dans laquelle le volume de la tranchée $V_{trench}$ est compris entre 1 650 x $10^{-3}$ $\mu$m$^2$ et 4 500 x $10^{-3}$ $\mu$m$^2$ et donné par :

$$V_{trench} = 2\pi \left| \int_{R2}^{R3} \Delta n_{trench}(r)\, r\, dr \right|$$

2. Fibre selon la revendication 1, dans laquelle la différence d'indice ($\Delta n_1$) entre l'indice maximal d'âme optique et la gaine externe est comprise entre -1,0 x $10^{-3}$ et 0,8 x $10^{-3}$.

3. Fibre selon l'une quelconque de la revendication 1 ou de la revendication 2, dans laquelle la différence d'indice ($\Delta n_2$) entre la gaine déprimée extérieure et la gaine externe est comprise entre -18 x $10^{-3}$ et -12 x $10^{-3}$.

4. Fibre selon l'une quelconque de la revendication 1 à la revendication 3, dans laquelle la différence de distance entre le troisième rayon (R3) et le deuxième rayon (R2) est comprise entre 2,4 $\mu$m et 10 $\mu$m.

5. Fibre selon l'une quelconque de la revendication 1 à la revendication 4, dans laquelle la différence d'indice ($\Delta n_{trench}$) entre la tranchée et la gaine déprimée extérieure est comprise entre -6 x $10^{-3}$ et -2 x $10^{-3}$.

6. Fibre selon l'une quelconque de la revendication 1 à la revendication 5, dans laquelle la diminution de largeur de bande de lancement en trop-plein entre la largeur de bande de lancement en trop-plein mesurée sur 500 m et la largeur de bande de lancement en trop-plein mesurée sur 8 km ($\Delta$B) à une longueur d'onde de 850 nm est inférieure à 10 %.

7. Fibre selon l'une quelconque de la revendication 1 à la revendication 6, dans laquelle la diminution de largeur de bande de lancement en trop-plein entre la largeur de bande de lancement en trop-plein mesurée sur 500 m et la largeur de bande de lancement en trop-plein mesurée sur 8 km ($\Delta$B) à une longueur d'onde de 1 300 nm est inférieure à 30 %.

8. Fibre selon l'une quelconque de la revendication 1 à la revendication 7, dans laquelle la taille d'âme à 850 nm mesurée à 2 m avec la technique du champ proche est égale au premier rayon plus ou moins 2 $\mu$m.

9. Fibre selon l'une quelconque de la revendication 1 à la revendication 8, dans laquelle la différence d'indice entre la tranchée et la gaine externe est comprise entre -24 x $10^{-3}$ et -14 x $10^{-3}$.

**10.** Fibre selon l'une quelconque de la revendication 1 à la revendication 9, dans laquelle la différence d'indice entre la gaine déprimée intérieure et la gaine déprimée extérieure est comprise entre -2 x $10^{-3}$ et 2 x $10^{-3}$.

**11.** Fibre selon l'une quelconque de la revendication 1 à la revendication 10, dans laquelle alpha est compris entre 1,9 et 2,1.

**12.** Fibre selon l'une quelconque de la revendication 1 à la revendication 11, dans laquelle la largeur de bande de lancement en trop-plein à une longueur d'onde de 850 nm est supérieure à 500 MHz.km, et de préférence supérieure à 1 000 MHz.km.

**13.** Fibre selon l'une quelconque de la revendication 1 à la revendication 12, dans laquelle la largeur de bande de lancement en trop-plein à une longueur d'onde de 1 300 nm est supérieure à 500 MHz.km, et de préférence supérieure à 1 000 MHz.km.

**14.** Procédé de fabrication d'une fibre optique selon l'une quelconque des revendications 1 à 13.

Figure 1

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011109263 A
- US RE30635 E
- US 4314833 A
- EP 2312350 A1
- US 20110085770 A1
- WO 2008085851 A
- US 20080166094 A
- EP 2166386 A
- US 20100067858 A
- EP 2166386 A1
- US 20100067858 A1
- EP 2220524 A

**Non-patent literature cited in the description**

- **D. GLOGE et al.** Multimode theory of graded-core fibres. *Bell system Technical Journal,* 1973, 1563-1578
- **G. YABRE.** Comprehensive theory of dispersion in graded-index optical fibres. *Journal of Lightwave Technology, February,* 2000, vol. 18 (2), 166-177